# FASCICULE DE BREVET EUROPEEN

(11) **EP 2 435 234 B1**
(45) Date de publication et mention de la délivrance du brevet: **03.04.2013**
(21) Numéro de dépôt: 10728805.2
(22) Date de dépôt: 21.05.2010
(51) Int. Cl.: B29C 49/48, B29C 49/56

(54) **DISPOSITIF DE MOULAGE AVEC CIRCUIT(S) DE FLUIDE**
FORMVORRICHTUNG MIT FLUIDKREISLAUF/FLUIDKREISLÄUFEN
MOLDING DEVICE WITH FLUID CIRCUIT(S)

(30) Priorité: 29.05.2009 FR 0953563
(43) Date de publication de la demande: 04.04.2012
(73) Titulaire: Sidel Participations, 76930 Octeville sur Mer (FR)
(72) Inventeur: ROUSSEAU, Nicolas, F-76930 Octeville-sur-mer (FR); MOUCHELET, Marc, F-76930 Octeville-sur-mer (FR)
(74) Mandataire: Cabinet Plasseraud
(86) Numéro de dépôt international: PCT/FR2010/050994
(87) Numéro de publication internationale: WO 2010/136709

(56) Documents cités:
- FR-A1- 2 589 099
- US-A- 3 891 371
- US-A- 4 361 434
- US-B1- 6 447 281

## Description

La présente invention concerne un dispositif de moulage pour la fabrication de récipients par soufflage, ou étirage-soufflage, à partir de préformes en matériau thermoplastique et, plus particulièrement, elle concerne l'organisation de circuit(s)aménagé(s) dans ce dispositif de moulage pour établir une circulation de fluide(s).

Ce dispositif de moulage comprend un moule formé notamment de deux demi-moules qui sont réunis, au moyen de leur palier, par un arbre propre à autoriser leur rotation entre une position de fermeture et une position d'ouverture et cette circulation fluidique dans les parois de ces demi-moules peut concerner diverses fonctions comme, par exemple, la régulation thermique de la ou des parois dudit moule, mais elle peut aussi concerner la compensation de pression apportée à la cavité de moulage.

Le document US 6 447 281, par exemple, décrit un aménagement de moule qui permet d'établir une régulation thermique des parois du moule, laquelle régulation thermique est réalisée par l'intermédiaire d'un fluide caloporteur amené au niveau desdites parois, par des canaux qui forment un circuit interne. Ce circuit est alimenté par des conduits souples, ou flexibles, qui sont connectés sur son entrée et sur sa sortie.

Ces différents conduits d'amenée et de retour du fluide, associés à chaque demi-moule, sont soumis aux mêmes mouvements que les demi-moules, c'est-à-dire à des mouvements répétés de fermeture et d'ouverture, lesquels mouvements s'effectuent à des cadences de plus en plus élevées.

Ces mouvements des flexibles, dans des conditions de température parfois sévères, provoquent une fatigue et une usure rapide desdits flexibles avec, bien sûr, des risques importants de rupture. Ces risques de rupture font que ces flexibles présentent un danger sérieux pour les opérateurs et qu'ils peuvent aussi, en cas de rupture provoquer des dégradations importantes au niveau de l'unité porte-moule et de tout l'environnement de la machine de soufflage.

Ces flexibles sont également encombrants autour du moule et ils ont tendance à contrarier l'ouverture des demi-moules. Sur un autre plan, et ceci malgré l'emploi de couleurs voyantes et distinctes selon le type de fluide, la présence de tous ces flexibles n'est pas des plus heureuses sur un plan purement esthétique.

La présente invention propose une solution à ces problèmes qui sont liés à l'emploi de flexibles pour alimenter les demi-moules d'une machine de soufflage, ou d'étirage-soufflage.

Le dispositif de moulage selon l'invention présente un aspect particulièrement sobre et attractif qui tire partie des configurations actuelles de ces dispositifs de moulage ; le coût de l'aménagement, la sécurité des opérateurs et de l'installation en général, et la maintenance de cet équipement du dispositif de moulage selon l'invention, sont sans communes mesures avec les solutions antérieures.

Le dispositif de moulage selon l'invention est installé sur le bâti d'une unité porte-moule qui est positionnée sur le carrousel d'une machine de soufflage, ou d'étirage-soufflage, et il comporte un moule porté par ledit bâti, lequel moule est formé notamment de deux demi-moules qui sont réunis par un même arbre sur lequel ils sont articulés au moyen de paliers propres à autoriser leur rotation entre une position de fermeture et une position d'ouverture, et l'un au moins de ces demi-moules comporte des canaux qui forment un circuit intérieur permettant la circulation d'un fluide approprié, lequel dispositif de moulage comprend, d'une part, un arbre d'articulation qui est fixe par rapport audit bâti de l'unité porte-moule et qui est muni de forages aménagés pour accueillir l'arrivée et le retour du fluide et, d'autre part, des joints tournants fluidiques solidaires du demi-moule auquel ils sont associés, lesquels joints sont montés tournant sur ledit arbre d'articulation et ils coopèrent avec ses forages pour alimenter ledit circuit intérieur, qu'il s'agisse de demi-moules faisant partie d'un moule appelé communément "moule portefeuille" ou d'un moule appelé communément "moule tulipe".

Selon un premier mode de réalisation de l'invention, le dispositif de moulage comporte des joints tournants fluidiques qui sont aménagés directement au niveau des paliers du ou des demi-moules selon le cas.

Selon un autre mode de réalisation de l'invention, le dispositif de moulage comporte des joints tournants fluidiques rapportés sur l'un au moins des demi-moules, lesquels joints tournants sont constitués d'une bague associée audit demi-moule par le biais de bras, laquelle bague coopère avec un prolongement de l'arbre d'articulation qui s'étend au-delà de l'encombrement du moule, et cette bague, avec son bras, est munie de canaux qui relient les forages dudit arbre d'articulation aux canaux du circuit intérieur dudit demi-moule.

L'invention sera encore détaillée à l'aide de la description suivante et des dessins annexés, donnés à titre indicatif, et dans lesquels :
- la figure 1 montre, de façon schématique, un dispositif de moulage aménagé avec des joints tournants selon un premier mode de réalisation de l'invention ;
- la figure 2 montre, de façon partielle et schématique également, un second mode de réalisation des joints tournants du dispositif de moulage selon l'invention.

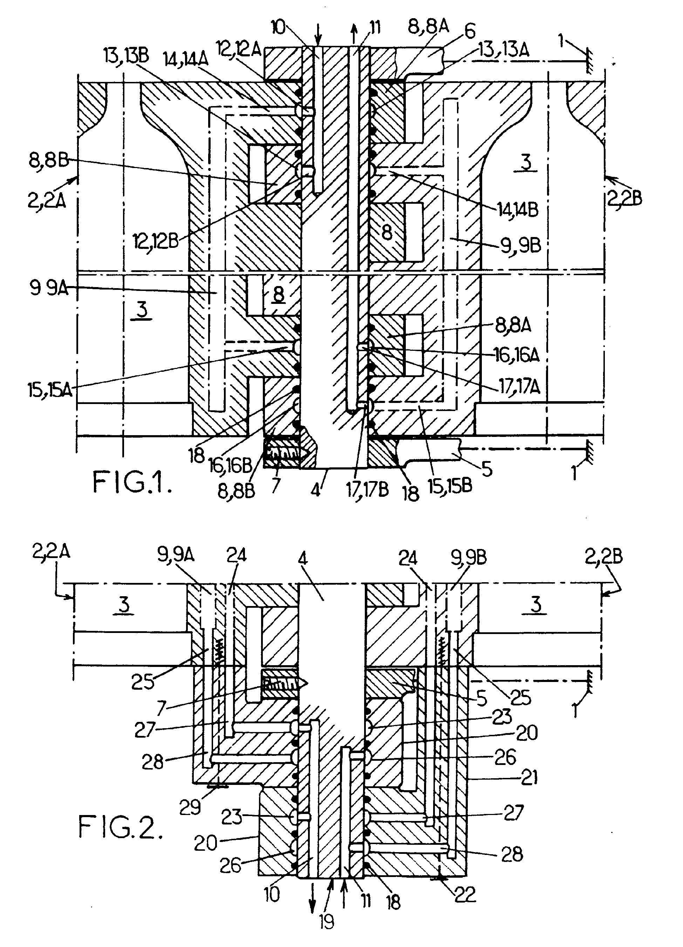

Le dispositif de moulage, représenté schématiquement figure 1, fait partie d'une unité porte-moule dont le bâti 1 est solidaire du carrousel, non représenté, d'une machine de soufflage, ou d'étirage-soufflage, de préformes en matériau thermoplastique, comme détaillé dans le document US précité.

Ce dispositif de moulage comprend un moule qui est constitué de deux demi-moules 2, repérés 2A et 2B, qui comportent chacun une empreinte 3 qui correspond à la forme du récipient obtenu par le soufflage d'une préforme.

Ce moule est généralement constitué de trois parties : les deux demi-moules 2A, 2B et un moule de fond, ou fond de moule, non représenté, qui coopère avec les deux demi-moules 2.

Ces deux demi-moules 2 sont réunis par un axe ou arbre 4, lequel arbre 4 est porté par le bâti 1 de l'unité porte-moule ; il est pris dans une chape qui comprend deux platines 5 et 6 et ces platines 5 et 6 sont solidaires dudit bâti 1.

L'arbre 4 est fixe, immobilisé, par exemple, sur la platine 5, par tout moyen approprié comme la vis pointeau 7 représentée sur la figure.

Les demi-moules 2 comportent des paliers 8 qui coopèrent avec l'arbre 4. Ces paliers 8, repérés 8A et 8B pour chaque demi-moule 2A et 2B respectivement, autorisent le pivotement desdits demi-moules sur l'arbre 4 entre une position de fermeture pour permettre le moulage du récipient et une position d'ouverture qui permet l'évacuation du récipient moulé ainsi que la mise en place d'une nouvelle préforme.

Selon le procédé de fabrication des récipients, comme décrit dans le document US précité, chaque demi-moule peut comporter des moyens qui permettent d'assurer, par exemple, une régulation thermique des parois qui portent l'empreinte 3 du récipient.

Ces moyens permettant la régulation thermique sont constitués de circuits réalisés à partir de canaux qui sont forés dans les parois des demi-moules 2A et/ou 2B. La figure 1 montre, de façon schématique, l'esquisse des circuits 9 qui permettent d'introduire un fluide dans le demi-moule correspondant.

Selon les nécessités, seul l'un des demi-moules 2, le demi-moule 2A, par exemple, peut comporter un circuit 9A pour permettre la circulation d'un fluide ayant une fonction de régulation thermique ou autre. Comme mentionné précédemment, en liaison avec le document US précité, le circuit 9A peut être utilisé pour canaliser un fluide caloporteur ou être utilisé pour amener de l'air comprimé dit de compensation, au niveau de la chambre de moulage.

Pour une utilisation liée à la régulation thermique, avec un fluide caloporteur, le dispositif de moulage est équipé d'un circuit 9 qui est aménagé dans chacune des deux parois portant l'empreinte 3 du récipient, au niveau de chaque demi-moule 2.

Ces deux circuits 9A et 9B de fluide sont alimentés à partir de canaux qui sont forés directement dans l'arbre 4, axialement, et au moyen d'un système de distribution intégré.

Un premier canal 10, qui correspond, par exemple, à l'arrivée du fluide, est foré axialement dans l'arbre 4 et son entrée est aménagée pour être connectée à un conduit, non représenté, qui est lui-même relié à une source d'alimentation qui fournit le fluide appropriée.

Ce canal 10 peut alimenter le circuit 9A ainsi que le circuit 9B ; cette jonction entre le canal 10 et les circuits 9A et 9B s'effectue par un système distributeur en forme de joints tournants et ces joints tournants sont aménagés directement dans les paliers 8 correspondants, c'est-à-dire dans les paliers 8A et les paliers 8B, respectivement.

Un second canal 11, foré également axialement dans l'arbre 4, assure le retour du fluide. Ce canal 11 est foré dans l'arbre 4 et son extrémité, à la sortie dudit arbre, est aménagée pour être connectée à un conduit de retour, non représenté.

Comme précédemment, la jonction entre les circuits 9A, 9B et ce canal 11, s'effectue au moyen des joints tournants qui sont aménagés également dans les paliers 8A et 8B des demi-moules 2A et 2B respectivement.

D'une façon plus détaillée, la communication entre le canal 10 d'arrivée du fluide et le circuit 9, pour chaque demi-moule 2, s'effectue au moyen de forages 12 disposés radialement dans l'arbre 4 et de gorges 13 circulaires aménagées en face desdits forages 12, dans les paliers 8 correspondants desdits demi-moules 2, et chaque gorge 13 est en communication avec un canal 14 disposé à l'entrée du circuit 9.

Ainsi, pour l'arrivée du fluide dans le demi-moule 2A, l'arbre 4 comporte un forage 12A qui débouche dans une gorge 13A aménagée dans l'un des paliers 8A correspondant et cette gorge 13A communique avec un canal 14A qui la relie à l'entrée du circuit 9A. De même, pour le demi-moule 2B, l'arbre 4 comporte un forage 12B qui débouche dans une gorge 13B, laquelle gorge 13B est aménagée au niveau de l'un des paliers 8B et elle communique avec un canal 14B qui la relie à l'entrée du circuit 9B.

De la même façon, le retour du fluide depuis la sortie du circuit 9, pour chaque demi-moule 2, s'effectue en passant par un canal 15 qui débouche dans une gorge 16 du palier 8 correspondant et cette gorge 16 communique avec un forage 17, disposé radialement dans l'arbre 4 et qui débouche dans le forage 11 dudit arbre 4.

Ainsi, pour le retour du fluide dans le demi-moule 2A, on trouve, successivement, le canal 15A, la gorge 16A et le forage 17A qui débouche dans le forage 11 de l'arbre 4. De même, pour le demi-moule 2B, on trouve, successivement, le canal 15B, la gorge 16B et le forage 17B qui débouche dans le forage 11 de l'arbre 4.

On remarque que le canal 14 qui correspond à l'entrée du circuit 9, et le canal 15 qui correspond à la sortie, sont disposés sur les paliers 8 extrêmes de chaque demi-moule 2.

Chaque palier 8 comporte, de part et d'autre de chaque gorge 13, ou 16, selon le cas, des joints 18 d'étanchéité du type joint torique qui sont associés à un joint frottant composite.

Cet aménagement du dispositif de moulage, avec un système de joints tournants, permet de limiter le nombre de pièces en mouvement. En effet, l'arbre 4 étant fixe, par rapport au bâti 1 de l'unité porte-moule, cette circulation d'un fluide dans le ou les demi-moules 2 s'effectue, entre l'arrivée et le retour dudit fluide, d'une façon qui est interne, c'est-à- dire que le fluide circule dans l'arbre 4 d'articulation des demi-moules 2 et dans ces demi-moules 2, directement, en passant par les paliers 8 de ces derniers.

La figure 2 montre un second mode de réalisation du dispositif de moulage selon l'invention dont les parois sont, chacune, équipées d'un circuit 9, qui est représenté de façon simplifiée, pour la circulation d'un fluide caloporteur ou autre.

Ces circuits 9 sont aménagés, comme dans le brevet US précité, dans la paroi de chaque demi-moule 2A, 2B et on retrouve un système de distribution du fluide par joints tournants pour l'alimentation de chaque circuit 9. Comme précédemment, selon la fonction du fluide, un seul demi-moule 2 peut être concerné par cette alimentation en fluide.

Dans ce mode de réalisation de la figure 2, les joints tournants ne font pas directement partie des demi-moules 2. Ils sont rapportés sur chaque demi-moule 2, et ils sont disposés sur un prolongement 19 de l'arbre 4, lequel prolongement s'étend en dehors de l'encombrement du moule proprement dit, en dehors de l'espace pris par les demi-moules 2 sur ledit arbre 4.

Cet aménagement permet d'accéder de façon commode au système de joints tournants, sans avoir à démonter les demi-moules 2 ; il permet aussi de conserver un montage classique des demi-moules 2 sur l'arbre 4, avec des paliers conventionnels, et en particulier des paliers avec ou sans graissage.

L'arbre 4 comporte, comme illustré figure 2, un prolongement 19 qui s'étend au-delà de la platine 5, par exemple, et il comporte, aménagés dans ce prolongement 19, comme précédemment, des forages 10 et 11 disposés axialement. Ces forages 10 et 11 sont aménagés pour accueillir respectivement, l'arrivée et le retour du fluide, qu'il s'agisse d'un fluide caloporteur ou autre.

Chaque demi-moule, 2A, 2B, est associé à une sorte de distributeur rotatif constitué de ces joints tournants qui se situent sur ce prolongement 19 de l'arbre 4, coopérant avec les canaux 10 et 11 aménagés dans ce prolongement 19.

Ces joints tournants sont constitués - d'une bague 20 qui enserre le prolongement 19 de l'arbre 4 et - d'un appendice en forme de bras 21 qui assure la liaison entre ladite bague 20 et le demi-moule 2 correspondant ; chaque bras 21 étant fixé audit demi-moule 2 correspondant au moyen d'une vis 22, par exemple.

Chaque bague 20 comporte deux gorges : une gorge 23 pour l'arrivée du fluide, qui communique, d'une part, avec le forage 10 du prolongement 19 de l'arbre 4 et, d'autre part, avec l'entrée 24 du circuit 9, et, à la suite de la sortie 25 dudit circuit 9, chaque bague 20 comporte une gorge 26 pour le retour, qui communique avec le forage 11 dudit prolongement 19 de l'arbre 4.

Des canaux complémentaires 27, 28, aménagés dans les bagues 20 et dans les bras 21 font la liaison entre les gorges 23, 26 et, respectivement, l'entrée 24 et la sortie 25 du circuit 9 pour chaque demi-moule 2 concerné.

Dans les deux modes de réalisation représentés figure 1 et 2, l'arbre 4 est fixe, solidaire du bâti 1. L'aménagement de cet arbre 4, pour alimenter des circuits internes situés dans les parois des demi-moules 2, est le même, qu'il s'agisse de demi-moules 2 qui correspondent à un moule du type "moule portefeuille" ou à un moule du type "tulipe" comme décrit dans le document FR 2 912 952.

Par ailleurs, l'aménagement du dispositif de moulage ne se limite pas aux modes de réalisation représentés du fait que, selon les besoins, un seul distributeur en forme de joints tournants peut être utilisé pour le passage d'un fluide caloporteur, ou autre, selon la fonction qui lui est attribuée.

De plus, les deux modes de distribution, par joints tournants situés dans les paliers ou par joints tournants rapportés, peuvent être combinés pour accroître les possibilités d'alimentation avec plusieurs fluides du type caloporteur ou autre.

## Revendications

1. Dispositif de moulage du type installé sur le bâti d'une unité porte-moule, laquelle unité porte-moule est positionnée sur le carrousel d'une machine de soufflage, ou d'étirage-soufflage, lequel dispositif de moulage comporte un moule porté par ledit bâti, et en particulier un moule qui est formé notamment de deux demi-moules (2) réunis par un même arbre sur lequel ils sont articulés au moyen de paliers propres à autoriser leur rotation entre une position de fermeture et une position d'ouverture, et l'un au moins de ces demi-moules (2) comporte des canaux qui forment un circuit (9) intérieur permettant la circulation d'un fluide approprié, **caractérisé en ce que** ledit arbre (4) d'articulation est monté fixe par rapport au bâti (1) de l'unité porte-moule et il comporte des forages (10, 11) aménagés pour accueillir l'arrivée et le retour dudit fluide approprié et **en ce que** des joints tournants fluidiques qui sont solidaires du demi-moule (2) auquel ils sont associés, sont montés sur ledit arbre (4) d'articulation et ils coopèrent avec lesdits forages (10, 11) pour alimenter ledit circuit (9) intérieur.

2. Dispositif de moulage selon la revendication 1, **caractérisé en ce qu'**il comporte des joints tournants fluidiques qui sont aménagés directement au niveau des paliers (8) du ou des demi-moules (2), selon le cas.

3. Dispositif de moulage selon la revendication 1, **caractérisé en ce qu'**il comporte des joints tournants fluidiques rapportés sur l'un au moins des demi-moules (2), lesquels joints tournants sont constitués d'une bague (20) qui est associée par un bras (21) audit demi-moule (2), laquelle bague (20) coopère avec un prolongement (19) de l'arbre (4) d'articulation qui s'étend au-delà de l'encombrement du moule, et cette bague (20) avec son bras (21) sont munis de canaux (27, 28) qui relient, respectivement, les forages (10, 11) dudit arbre (4) d'articulation à l'entrée (24) et à la sortie (25) du circuit (9) intérieur dudit demi-moule (2).

## Claims

1. Molding device of the type installed on the frame of a mold carrier unit, which mold carrier unit is positioned on the carousel of a blow-molding or stretch blow-molding machine, which molding device comprises a mold carried by said frame, and in particular a mold that is formed in particular of two half-molds (2) joined together by a single shaft on which they are hinged by means of bearings capable of allowing them to rotate between a closed position and an open position, and at least one of these half-molds (2) comprises channels that form an inner circuit (9) for the circulation of a suitable fluid, **characterized in that** said hinge shaft (4) is mounted fixed relative to the frame (1) of the mold carrier unit and comprises bores (10, 11) provided for receiving and returning said suitable fluid and **in that** rotary fluid seals that are connected to the half-mold (2) with which they are associated are mounted on said hinge shaft (4) and interact with said bores (10, 11) to supply said inner circuit (9).

2. Molding device according to claim 1, **characterized in that** it comprises rotary fluid seals that are provided directly on the bearings (8) of the half-mold(s) (2), as applicable.

3. Molding device according to claim 1, **characterized in that** it comprises rotary fluid seals assembled on at least one of the half-molds (2), which rotary seals are constituted by a ring (20) that is associated by an arm (21) with said half-mold (2), which ring (20) interacts with an extension (19) of the hinge shaft (4) that extends beyond the footprint of the mold, and this ring (20) with its arm (21) are equipped with channels (27, 28) that respectively connect the bores (10, 11) of said hinge shaft (4) to the inlet (24) and to the outlet (25) of the inner circuit (9) of said half-mold (2).

## Patentansprüche

1. Formvorrichtung der Art, die auf dem Unterteil einer Formträgereinheit installiert ist, wobei die Formträgereinheit auf der Kreisbahn einer Blas- oder Streckblasmaschine angeordnet ist, wobei die Formvorrichtung eine vom Unterteil getragene Form umfasst und im Besonderen eine Form, die insbesondere aus zwei Halbformen (2) ausgebildet ist, die durch ein und dieselbe Welle verbunden sind, an der sie mit Hilfe von Lagern gelenkig gelagert sind, die ihnen eine Rotation zwischen einer geschlossenen Position und einer geöffneten Position ermöglichen können, und wobei zumindest eine der Halbformen (2) Kanäle umfasst, die einen innenliegenden Kreislauf (9) bilden, der die Zirkulation eines geeigneten Fluids ermöglicht, **dadurch gekennzeichnet, dass** die Gelenkwelle (4) in Bezug auf das Unterteil (1) der Formträgereinheit fest angebracht ist und Bohrungen (10, 11) umfasst, die ausgebildet sind, um den Ein- und Austritt des geeigneten Fluids zu ermöglichen, und dass die Fluid-Drehverbindungen, die mit der Halbform, der sie zugeordnet sind, kraftschlüssig verbunden sind, an der Gelenkwelle (4) angebracht sind und mit den Bohrungen (10, 11) zusammenwirken, um den innenliegenden Kreislauf (9) zu beschicken.

2. Formvorrichtung nach Anspruch 1, **dadurch gekennzeichnet, dass** sie Fluid-Drehverbindungen umfasst, die direkt im Bereich der Lager (8) der Halbform(en) (2) angeordnet sind.

3. Formvorrichtung nach Anspruch 1, **dadurch gekennzeichnet, dass** sie Fluid-Drehverbindungen umfasst, die auf zumindest eine der Halbformen (2) aufgesteckt sind, wobei die Drehverbindungen aus einem Ring (20) ausgebildet sind, der durch einen Arm (21) mit der Halbform (2) verbunden ist, wobei der Ring (20) mit einer Verlängerung (19) der Gelenkwelle (4) zusammenwirkt, die sich über die Größe der Form hinaus erstreckt, und wobei der Ring (20) mit seinem Arm (21) mit Kanälen (27, 28) ausgestattet sind, die jeweils die Bohrungen (10, 11) des Gelenkarms (4) arm Eintritt (24) und am Austritt (25) des innenliegenden Kreislaufs (9) der Halbform (2) verbinden.
